# EUROPÄISCHE PATENTSCHRIFT

(11) **EP 2 733 555 B1**
(45) Veröffentlichungstag und Bekanntmachung des Hinweises auf die Patenterteilung: **29.05.2019**
(21) Anmeldenummer: 13192984.6
(22) Anmeldetag: 14.11.2013
(51) Int. Cl.: G05B 19/042, H04L 12/40

(54) **BUS-System mit Teilnehmern, die Produzent und / oder Konsumenten von Prozesswerten sind, Vorrichtung umfassend ein BUS-System, fluidisches System mit einem BUS-System und Verfahren zum Betrieb eines BUS-Systems**
BUS system with participants that are the producers and/or consumers of process values, device comprising a BUS system, fluidic system with a BUS system and method for operating a BUS system
Système BUS comprenant des participants qui sont des producteurs et/ou des consommateurs de valeurs de processus, dispositif comprenant un système BUS, système fluidique comprenant un système BUS et procédé de fonctionnement d'un système BUS

(30) Priorität: 14.11.2012 DE 102012022301
(43) Veröffentlichungstag der Anmeldung: 21.05.2014
(73) Patentinhaber: Bürkert Werke GmbH, 74653 Ingelfingen (DE)
(72) Erfinder: Schmötzer, Ralf, 74677 Dörzbach (DE); Haaf, Volker, 74564 Crailsheim (DE); Fischer, Marcus, 74196 Neuenstadt (DE)
(74) Vertreter: Prinz & Partner mbB

(56) Entgegenhaltungen:
- WO-A2-02/065221
- US-B1- 6 366 826
- LOBL I ET AL: "DISTRIBUTED AUTOMATION CONTROL USING BROADCASTING NETWORKS", PROCEEDINGS OF THE INTERNATIONAL CONFERENCE ON INDUSTRIAL ELECTRONICS, CONTROL AND INSTRUMENTATION. (IECON). BOLOGNA, SEPT. 5 - 9, 1994. PLENARY SESSION POWER ELECTRONICS; [PROCEEDINGS OF THE INTERNATIONAL CONFERENCE ON INDUSTRIAL ELECTRONICS, CONTRO, Bd. 2 OF 03, 5. September 1994 (1994-09-05), Seiten 1211-1213, XP000525498, ISBN: 978-0-7803-1329-3

## Beschreibung

### GEBIET DER ERFINDUNG

Die Erfindung betrifft eine Vorrichtung umfassend ein BUS-System mit einer Vielzahl von Teilnehmern, welche Produzent und / oder Konsument zumindest eines Prozesswertes sind. Außerdem betrifft die Erfindung ein fluidisches System mit einer solchen Vorrichtung sowie ein BUS-System mit einer Vielzahl von Teilnehmern und ein Verfahren zum Betrieb dieses BUS-Systems.

### TECHNISCHER HINTERGRUND

Verfahrenstechnische Systeme, insbesondere fluidische Systeme, umfassen eine Vielzahl von Komponenten, welche Prozesswerte, z.B. Messwerte oder Parameter, generieren und daher als Produzent des entsprechenden Prozesswertes bezeichnet werden. Außerdem werden Prozesswerte von den Komponenten des Systems verarbeitet oder die entsprechenden Komponenten werden mit Hilfe der Prozesswerte geregelt oder gesteuert. Solche, die Prozesswerte verarbeitenden Komponenten, werden als Konsument der Prozesswerte bezeichnet. Zum Austausch der Prozesswerte sind die Komponenten eines solchen Systems vielfach über ein BUS-System untereinander verbunden. Die Komponenten sind also ebenfalls Teilnehmer dieses BUS-Systems.

In einem verfahrenstechnischen System müssen die Konsumenten und die Produzenten von Prozesswerten einander passend zugeordnet werden. Insbesondere sollte jeder Konsument eines Prozesswertes dazu in der Lage sein, die von ihm benötigten Prozesswerte von einem Produzenten zu empfangen, sie dem entsprechenden Produzenten zuzuordnen und nach seinen Bedürfnissen zu konsumieren. Eine Zuordnung zwischen Konsumenten und Produzenten von Prozesswerten erfolgt vielfach mit Hilfe einer Mastereinheit des Systems. Eine solche Mastereinheit verfügt über die notwendigen Informationen hinsichtlich der von den einzelnen Komponenten des Systems produzierten und konsumierten Prozesswerte. Basierend auf dieser Information kann eine entsprechende Zuordnung getroffen werden. Derartige Systemarchitekturen sind jedoch wenig flexibel, da bei einem Austausch von Komponenten oder bei Veränderungen des Systems die Mastereinheit aufwändig neu konfiguriert werden muss.

US 6 366 826 B1 offenbart eine Vorrichtung und ein Verfahren für ein BUS-System mit einer Vielzahl von Teilnehmern, wobei den Teilnehmern des BUS-Systems Informationen bezüglich zumindest einer Zuordnungseigenschaft von den Teilnehmern einer Gruppe von Teilnehmern des BUS-Systems und von den entsprechenden Teilnehmern der Gruppe selbst übermittelt werden. Die Zuordnungseigenschaft wird durch den von den entsprechenden Teilnehmern produzierten und/oder konsumierten zumindest einen Prozesswert bestimmt.

### ZUSAMMENFASSUNG

Es ist eine Aufgabe der Erfindung eine verbesserte Vorrichtung, umfassend ein BUS-System mit einer Vielzahl von Teilnehmern, welche Produzent und / oder Konsument von Prozesswerten sind, anzugeben. Es ist eine weitere Aufgabe der Erfindung, ein verbessertes fluidisches System, umfassend eine solche Vorrichtung anzugeben. Außerdem ist es eine Aufgabe der Erfindung, ein verbessertes BUS-System sowie ein verbessertes Verfahren zum Betrieb eines solchen BUS-Systems anzugeben.

Die Aufgabe wird durch die Gegenstände der unabhängigen Ansprüche gelöst.

Gemäß einem Aspekt der Erfindung wird eine Vorrichtung angegeben, welche ein BUS-System mit einer Vielzahl von Teilnehmern umfasst. Die Teilnehmer können Produzent und / oder Konsument zumindest eines Prozesswertes sein. Bei der Vorrichtung kann es sich um ein verfahrenstechnisches System oder eine verfahrenstechnische Installation und insbesondere um ein fluidisches System handeln. Die Prozesswerte können Messwerte und / oder Parameter innerhalb eines solchen Systems sein. Wenn es sich bei der Vorrichtung um ein fluidisches System handelt, können die Teilnehmer, insbesondere alle Teilnehmer, des BUS-Systems fluidische Komponenten sein. Es ist jedoch nicht notwendig, dass alle Teilnehmer fluidische Komponenten sind. Die Teilnehmer einer Gruppe von Teilnehmern des BUS-Systems können den Teilnehmern des BUS-Systems Informationen bezüglich zumindest einer Zuordnungseigenschaft übermitteln. Diese Zuordnungseigenschaft betrifft die jeweiligen Teilnehmer der Gruppe selbst, und wird von dem entsprechenden Teilnehmer der Gruppe selbst übermittelt. Die Zuordnungseigenschaft kann durch den von dem entsprechenden Teilnehmer produzierten und / oder konsumierten zumindest einem Prozesswert bestimmt sein.

Vorteilhaft können die Prozesswerte mit einer Klassifikation versehen sein, wobei in diesem Fall die Zuordnungseigenschaft neben dem Prozesswert außerdem durch die Klassifikation des Prozesswertes und / oder durch einen Typ des Prozesswertes bestimmt sein kann.

Eine Klassifikation eines Prozesswertes kann beispielsweise anhand eines Typs und / oder einer Art des den betreffenden Prozesswert produzierenden oder konsumierenden Teilnehmers bestimmt sein. Außerdem kann eine Klassifikation des Prozesswertes anhand einer Position und / oder anhand einer Anordnung des betreffenden Teilnehmers innerhalb einer Installation, insbesondere einer Anordnung innerhalb eines fluidtechnischen Systems, und / oder innerhalb des BUS-Systems bestimmt sein. Außerdem kann die Klassifikation des Prozesswertes anhand einer Funktionalität des Teilnehmers bestimmt sein. Ein Beispiel für eine Klassifikation wäre: Typ des Prozesswertes: Druck; Anordnung des Teilnehmers innerhalb einer Installation: Prozessstrang Nr. 3; Funktionalität des Teilnehmers: Drucksensor.

Das BUS-System kann, gemäß einer weiteren Ausführungsform, ein Feldbus-System sein. Insbesondere kann es sich um ein seriell und asynchron arbeitendes BUS-System handeln, beispielsweise um ein CAN basiertes Feldbus-System. Als Kommunikationsprotokoll kann CANopen oder ein zu CANopen kompatibles Protokoll verwendet werden.

In einem CANopen-Netzwerk ist gemäß dem Stand der Technik immer ein NMT-Master (NMT=Network Management) vorhanden, die übrigen Teilnehmer sind NMT-Slaves. Der NMT-Master hat die komplette Kontrolle über die Slave-Teilnehmer und kann deren Zustand ändern. Beispielsweise kann der NMT-Master die Slave-Teilnehmer in einen der im CANopen Standard definierten Zustände "Initialisierung", "Pre-Operational", "Operational" und "Stopped" setzen oder den Zustand eines Slave-Teilnehmers verändern. Im Zustand "Pre-Operational" können die Slave-Teilnehmer entsprechend dem CANopen-Standard nur über SDO-Nachrichten (SDO=Service Data Object) kommunizieren. Im Zustand "Stopped" kommunizieren die Teilnehmer ausschließlich über NMT- und Heartbeat-Nachrichten. Sie können weder PDO-Nachrichten (PDO=Process Data Objects) noch Emergency-Nachrichten versenden.

Gemäß einer Ausführungsform sind jedoch alle Teilnehmer des BUS-Systems mit einer gleichwertigen Netzwerkfunktionalität ausgestattet. Mit anderen Worten können also alle Teilnehmer beispielsweise die Funktionalität eines NMT-Masters aufweisen, und z.B. sich selbst oder andere Teilnehmer in einen anderen Betriebszustand setzen. Außerdem können die Teilnehmer des BUS-Systems beispielsweise keiner Beschränkung hinsichtlich des Typs der von ihnen versendeten Nachrichten unterliegen. Um eine entsprechende Nachricht zu versenden, können die Teilnehmer beispielsweise selbständig ihren Zustand ändern. Ebenso wie die Teilnehmer des BUS-Systems, entsprechend ihrer Netzwerkfunktionalität, als Master-Einheiten angesehen werden können, können in ähnlicher Weise auch alle Teilnehmer als Slave-Einheiten angesehen werden. Eine Unterscheidung in Master- und Slave-Einheiten wird nicht vorgenommen, da die Teilnehmer des BUS-Systems mit einer gleichwertigen Netzwerkfunktionalität ausgestattet sein können.

Ein erster Teilnehmer der Gruppe von Teilnehmern des BUS-Systems ist dazu ausgelegt, ein Angebots- und / oder ein Anfrage-Telegramm an die anderen Teilnehmer des BUS-Systems zu senden. Ein zweiter Teilnehmer des BUS-Systems kann dazu ausgelegt sein, in Reaktion auf ein Anfrage-Telegramm des ersten Teilnehmers ein Angebots-Telegramm zumindest an den ersten Teilnehmer zu senden.

Im Kontext der vorliegenden Beschreibung soll unter einem "Angebots-Telegramm" und einem "Anfrage-Telegramm" jeweils eine innerhalb des BUS-Systems kommunizierte Nachricht verstanden werden. Arbeitet das BUS-System gemäß dem CAN-Standard und verwendet CANopen als Kommunikationsprotokoll, kann es sich bei einem Angebots- oder Anfrage-Telegramm, gemäß einer solchen Ausführungsform der Erfindung, um ein Telegramm bzw. einen Frame handeln, der kompatibel zu dem CAN-Standard ist.

Ein Angebots-Telegramm kann Informationen bezüglich eines von einem Teilnehmer des BUS-Systems produzierten Prozesswertes umfassen. Umgekehrt kann ein Anfrage-Telegramm Informationen bezüglich eines von einem Teilnehmer des BUS-Systems zu konsumierenden Prozesswertes umfassen. Ist ein Teilnehmer des BUS-Systems Produzent von Prozesswerten, so kann dieser insbesondere dazu geeignet sein, Angebots-Telegramme zu versenden. Ist ein Teilnehmer des BUS-Systems hingegen Konsument von Prozesswerten, so kann dieser insbesondere dazu geeignet sein, Anfrage-Telegramme zu senden. Ein Teilnehmer kann insbesondere Konsument und gleichzeitig Produzent von Prozesswerten sein. Er kann also dazu ausgelegt sein, sowohl Angebots-Telegramme als auch Anfrage-Telegramme zu versenden bzw. zu empfangen. Insbesondere können die Teilnehmer des BUS-Systems, beispielsweise alle Teilnehmer des BUS-Systems, dazu ausgelegt sein, Angebots-Telegramme zu empfangen.

Innerhalb des BUS-Systems gemäß Aspekten der Erfindung erfolgt also eine direkte Kommunikation zwischen den Teilnehmern des BUS-System, ohne dass hierzu eine Mastereinheit notwendig wäre. Indem die Teilnehmer des BUS-Systems Angebots-Telegramme empfangen, ein Konsument eines Prozesswertes direkt einen Produzenten des von ihm benötigten Prozesswertes identifiziert, und anschließend diesen dem betreffenden Prozesswert zuordnet, kann er einen passenden Produzenten des Prozesswertes auffinden, ohne dass die Interaktion oder Konfiguration durch eine Mastereinheit notwendig ist. Die Möglichkeit einer manuellen Konfiguration der Teilnehmer über Servicedatenobjekte (SDO) bleibt hiervon unberührt. Diese Möglichkeit zur autonomen Selbstkonfiguration der Vorrichtung vereinfacht die Installation der Vorrichtung und erleichtert ihre Rekonfiguration, sowohl im Hinblick auf den Austausch als auch im Hinblick auf den Ersatz von Teilnehmern.

Gemäß einer weiteren Ausführungsform können die Teilnehmer der Gruppe des BUS-Systems jeweils zumindest Produzent zumindest eines Prozesswertes sein. Außerdem können die Teilnehmer der Gruppe dazu ausgelegt sein, jeweils ein Angebots-Telegramm an die übrigen Teilnehmer des BUS-Systems zu senden, welches Informationen bezüglich der von dem jeweiligen Teilnehmer produzierten Prozesswerte und eine Klassifikation dieser Prozesswerte umfasst. Zumindest ein weiterer Teilnehmer des BUS-Systems, welcher zumindest Konsument zumindest eines Prozesswertes ist, kann dazu ausgelegt sein, die Angebots-Telegramme der Teilnehmer der Gruppe zu empfangen und jeweils hinsichtlich der Klassifikation der angebotenen Prozesswerte auszuwerten. Diese Auswertung kann innerhalb des weiteren Teilnehmers erfolgen, beispielsweise indem dieser die Klassifikation der angebotenen Prozesswerte mit seinem eigenen Anforderungsprofil hinsichtlich der Klassifikation der von ihm konsumierten Prozesswerte vergleicht. Der weitere Teilnehmer des BUS-Systems kann aus den Teilnehmern der Gruppe diejenigen Teilnehmer auswählen, für die dieser Vergleich erfolgreich ist. An diese Untergruppe von Teilnehmern kann der weitere Teilnehmer jeweils ein spezifisches Anfrage-Telegramm senden. In diesem spezifischen Anfrage-Telegramm kann eine Abfrage hinsichtlich des Typs des angebotenen zumindest einen Prozesswertes enthalten sein. Bei diesem Typ kann es sich beispielsweise um die Einheit, den Datentyp und / oder die Genauigkeit des Prozesswertes handeln.

Durch den Abgleich der Zuordnungseigenschaften der angebotenen Prozesswerte mit einem Anforderungsprofil kann der weitere Teilnehmer eine Vorauswahl hinsichtlich des Produzenten des entsprechenden Prozesswertes treffen. Diese Vorauswahl erfolgt, in dem nur im Fall eines erfolgreichen Vergleichs an den entsprechenden Produzenten des Prozesswertes ein spezifisches Anfrage-Telegramm, bei welchem es sich um ein Standard CANopen-Telegramm handeln kann, gesendet wird. Die Vorauswahl verringert die Anzahl der innerhalb des BUS-Systems versendeten Nachrichten, sodass die Netzwerklast gesenkt werden kann.

Gemäß einer weiteren Ausführungsform können die Teilnehmer der Untergruppe dazu ausgelegt sein, auf dieses spezifische Anfrage-Telegramm des weiteren Teilnehmers ein ebenfalls spezifisches Angebots-Telegramm an den weiteren Teilnehmer zu senden. Dieses kann Informationen bezüglich des Typs, der von dem jeweiligen Teilnehmer der Untergruppe produzierten Prozesswertes umfassen. Der weitere Teilnehmer, welcher diese spezifischen Angebots-Telegramme empfängt, kann nun wiederum dazu ausgelegt sein, die Informationen bezüglich des Typs, der von den jeweiligen Teilnehmern der Untergruppen produzierten Prozesswerte, auszuwerten, und einen der Teilnehmer der Untergruppe dem betreffenden Prozesswert als Produzent fest zuzuordnen. In einer solchen Vorrichtung gemäß Aspekten der Erfindung kann ein Konsument eines Prozesswertes automatisch den passenden Produzenten selbst auffinden, wobei Informationen hinsichtlich des Typs des Prozesswertes zusätzlich berücksichtigt werden.

Der weitere Teilnehmer kann außerdem dazu ausgelegt sein, den oder die Produzenten des Prozesswertes zu überwachen. Basiert das BUS-System auf dem CANOpen Kommunikationsprotokoll, so kann diese Überwachung anhand der von dem Produzenten automatisch generierten Heartbeat-Messages erfolgen.

Die Vorrichtung kann außerdem dazu ausgelegt sein, dass ein Teilnehmer, welcher Konsument von Prozesswerten ist, nicht nur einen einzigen Produzenten, sondern mehrere redundant arbeitende Produzenten dem entsprechenden Prozesswert zuordnet. So kann der Konsument aus mehreren Produzenten bezüglich des Prozesswertes auswählen. Diese Redundanz erhöht die Zuverlässigkeit der Vorrichtung, da der konsumierende Teilnehmer automatisch einen alternativen Produzenten auswählt, falls der bisher bezüglich des betreffenden Prozesswertes eingesetzte Produzent ausfällt. In diesem Zusammenhang können alle Produzenten von dem Konsumenten überwacht werden.

Gemäß einem weiteren Aspekt der Erfindung wird ein fluidisches System angegeben, welches eine Vorrichtung gemäß Aspekten der Erfindung umfasst. Zumindest ein Teilnehmer des BUS-Systems dieser Vorrichtung kann eine fluidische Komponente sein. Insbesondere kann es sich bei der überwiegenden Anzahl der Teilnehmer um fluidische Komponenten handeln. Fluidische Komponenten sind beispielsweise fluidische Steuer- und Regeleinheiten, Ventile, Schieber, Durchflussbegrenzer, sensorische Einheiten zur Messung physikalischer Größen, z.B. einer Temperatur, eines Drucks, eines Durchflusses, etc.. Gemäß einem Ausführungsbeispiel können alle Teilnehmer des BUS-Systems, welche Produzenten und / oder Konsumenten von Prozessdaten sind, fluidische Komponenten sein.

Gemäß einem weiteren Aspekt der Erfindung wird ein BUS-System mit einer Vielzahl von Teilnehmern angegeben, wobei den Teilnehmern des BUS-Systems Informationen bezüglich zumindest einer Zuordnungseigenschaft der jeweiligen Teilnehmer einer Gruppe von Teilnehmern des BUS-Systems und von den entsprechenden Teilnehmern der Gruppe selbst übermittelt werden. Bei diesen Teilnehmern der Gruppe des BUS-Systems kann es sich um Produzenten und / oder Konsumenten von Prozesswerten handeln. Die Teilnehmer des BUS-Systems können hinsichtlich ihrer Netzwerkfunktionalität gleichwertig sein. Insbesondere kann das BUS-System keinen Teilnehmer mit einer Master-Funktionalität umfassen.

Gemäß einem weiteren Aspekt der Erfindung wird ein Verfahren zum Betrieb eines BUS-Systems mit einer Vielzahl von Teilnehmern angegeben. Die Teilnehmer einer Gruppe von Teilnehmern des BUS-Systems übermitteln den anderen Teilnehmern des BUS-Systems Informationen bezüglich einer ihrer Zuordnungseigenschaften. Dabei werden die Informationen von den Teilnehmern der Gruppe selbst übermittelt.

Gleiche oder ähnliche Vorteile, wie sie bereits im Hinblick auf die Vorrichtung gemäß Aspekten der Erfindung erwähnt wurden, treffen in gleicher oder ähnlicher Weise auch auf das fluidische System, das BUS-System und das Verfahren zum Betrieb eines BUS-Systems zu und sollen daher nicht wiederholt werden.

### KURZE BESCHREIBUNG DER ZEICHNUNGEN

Weitere vorteilhafte Aspekte der Erfindung ergeben sich aus der folgenden Beschreibung bevorzugter Ausführungsbeispiele unter Bezugnahme auf die Zeichnungen. In den Zeichnungen zeigt:
FIG. 1 eine schematische Darstellung eines fluidischen Systems, welches ein BUS-System umfasst, gemäß einem Ausführungsbeispiel,
FIG. 2 bis 5 Abschnitte eines Ablaufdiagramms, welches ein Verfahren zum Betrieb eines BUS-Systems gemäß einem Ausführungsbeispiel darstellt, und
FIG. 6 eine schematische Darstellung eines Anfrage- und ein Angebots-Telegramms, gemäß zweier Ausführungsbeispiele.

### DETAILLIERTE BESCHREIBUNG DER AUSFÜHRUNGSBEISPIELE

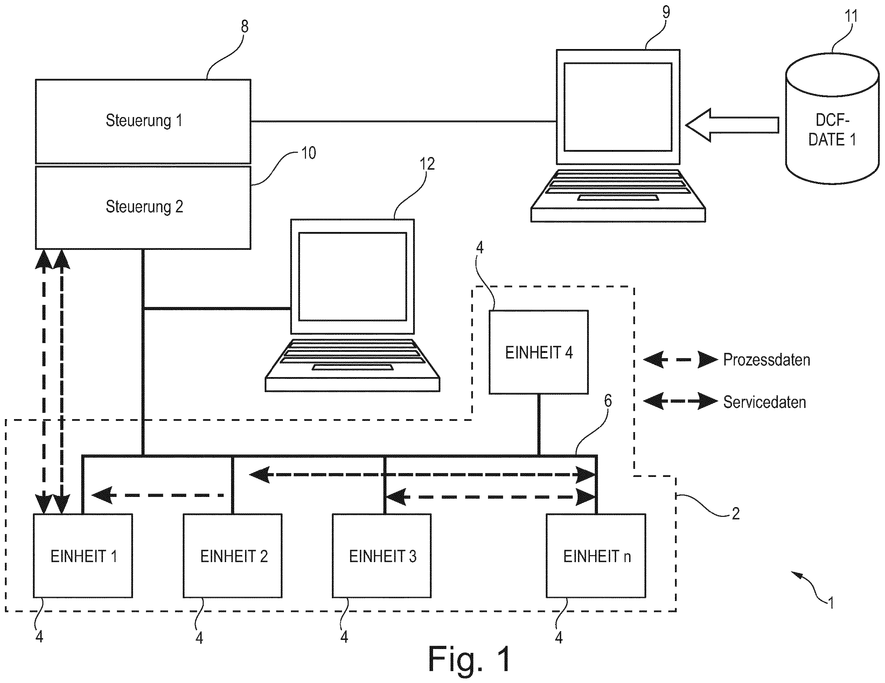

FIG. 1 zeigt eine schematische und vereinfachte Darstellung einer Vorrichtung 1, bei der es sich beispielsweise um ein fluidisches System handeln kann, gemäß einem Ausführungsbeispiel. Die Vorrichtung 1 umfasst ein BUS-System 2 gemäß einem Ausführungsbeispiel. Das BUS-System 2 umfasst eine Vielzahl von Teilnehmern 4, die mit "Einheit 1" bis "Einheit n" bezeichnet sind. Die Anzahl der Teilnehmer 4 ist lediglich durch das Kommunikationsprotokoll des BUS-Systems 2 begrenzt. Das BUS-System 2 kann ein asynchron und seriell arbeitendes BUS-System, insbesondere ein Feldbus-System, sein. Insbesondere kann es sich bei dem BUS-System 2 um ein CAN-BUS-System (CAN=Controller Area Network) handeln, welches entsprechend dem CAN-Standard arbeitet. Als Kommunikationsprotokoll kann beispielsweise CANopen oder ein zu CANopen kompatibles Kommunikationsprotokoll verwendet werden, welches dem von der CiA festgelegten Standard genügt (CiA=CAN in Automation).

Bei den Teilnehmern 4, welche mit einer Datenleitung 6 untereinander verbunden sind, kann es sich insbesondere um fluidische Komponenten des fluidischen Systems handeln. Wie bei den CAN basierten BUS-Systemen üblich, kann als Datenleitung 6 eine zwei- bzw. vieradrige Kupferleitung verwendet werden. Bei den fluidischen Komponenten kann es sich z.B. um Ventile, Sensoren, Messgeräte, Regelgeräte, Aktoren, Regler, etc. handeln. Ebenso kann es sich bei Teilnehmern 4 um Anzeigevorrichtungen, Steuereinheiten oder Gateways zur Programmierung oder Überwachung des fluidischen Systems handeln.

Die Teilnehmer 4 des BUS-Systems 2 können sowohl unidirektional als auch bidirektional miteinander kommunizieren. Es können sowohl Servicedaten als auch Prozessdaten übermittelt werden, wie mit entsprechenden Pfeilen in FIG. 1 dargestellt ist. Handelt es sich um ein CANopen basiertes BUS-System 2, so werden die Servicedaten in SDO-Telegrammen (SDO=Service Data Object) und die Prozessdaten in PDO-Telegrammen (PDO=Process Data Object) übertragen. Die Kommunikation ist nicht auf das BUS-System 2 selbst begrenzt. Die Teilnehmer 4 können ebenfalls mit einer außerhalb angeordneten ersten Steuerung 8 (Steuerung 1) auf gleiche Art und Weise kommunizieren. Insbesondere kann eine DCF-Konfigurationsdatei (DCF=Device Configuration File) von einem Speicher 11 über einen Steuerrechner 9 und die erste Steuerung 8 an einen oder mehrere Teilnehmer 4 des BUS-Systems 2, zur Konfiguration der Teilnehmer 4, übertragen werden. Die DCF-Konfigurationsdatei dient der Übertragung der Geräteeinstellungen an die Teilnehmer 4.

Den Teilnehmern 4 kann eine über ihre Funktionalität entsprechend dem CAN- bzw. CANopen-Standard hinausgehende weitere Funktionalität verliehen werden. Hierzu können die Teilnehmer 4 mittels eines weiteren Steuerrechners 12 und einer weiteren Steuerung 10 (Steuerung 2) eingerichtet werden. Der Steuerrechner 12 und die weitere Steuerung 10 dienen jedoch lediglich der entsprechenden Einrichtung der Teilnehmer 4. Die über den CAN- bzw. CANopen-Standard hinausgehende weitere Funktionalität betrifft die Teilnehmer 4 selbst und wird von diesen selbst zur Verfügung gestellt, ohne dass weitere Eingriffe von außen in das BUS-System 2 notwendig wären.

Diese weitere Funktionalität betrifft insbesondere die Fähigkeit der Teilnehmer 4 des BUS-Systems 2, selbstständig, autonom und automatisch eine Allokation zwischen einem Produzenten eines Prozesswertes und einem Konsumenten eines Prozesswertes herzustellen.

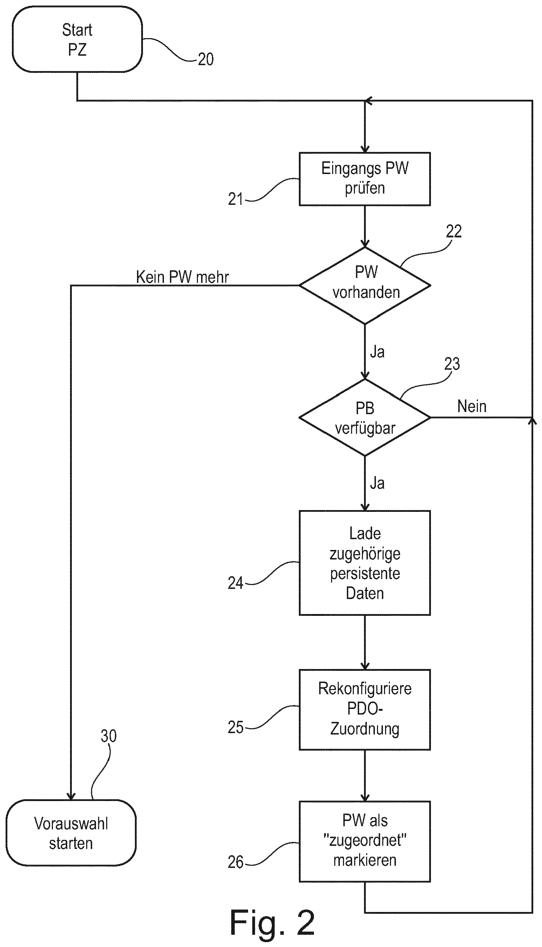

FIG. 2 zeigt einen Teil eines Ablaufdiagramms, welches ein Verfahren zur Partnerallokation zwischen einem Produzenten und einem Konsumenten zumindest eines Prozesswertes innerhalb einer Vorrichtung 2 gemäß einem Ausführungsbeispiel illustriert. Ein Teilnehmer 4 startet 20 die Partnerallokation oder Partnerzuordnung (in den Figuren kurz als PZ bezeichnet), indem er zunächst seine benötigten Prozesswerte abfragt 21 (in den Figuren wird PW als Abkürzung für Prozesswert verwendet). Es folgt eine Abfrage 22, in welcher der Teilnehmer 4 überprüft, ob ein Eingang für diese Prozesswerte vorhanden ist. Sollte dies der Fall sein, überprüft 23 der Teilnehmer 4 als nächstes, ob für den entsprechenden Prozesswert, welcher von dem Teilnehmer 4 konsumiert wird, eine Beschreibung des Produzenten, d.h. des produzierenden Teilnehmers 4, vorliegt (in den Figuren wird PB als Abkürzung für Produzentbeschreibung verwendet). Sollte dies nicht der Fall sein, so wird der Prozesswert als nicht verfügbar gekennzeichnet. Verfügt der Teilnehmer 4 bei einer erneuten Überprüfung 22 über keine Prozesswerte mehr, für die er, sofern vorhanden, eine Produzentenbeschreibung abfragen könnte, so tritt der Teilnehmer 4 in einen Zustand der Vorauswahl 30 ein. Sollte hingegen in Schritt 23 eine Beschreibung des Produzenten vorliegen, so wird diese Beschreibung als feststehend übernommen 24. Mit anderen Worten wird die bestehende Beschreibung des Produzenten des Prozesswertes als persistente Produzentenbeschreibung in dem Teilnehmer 4 abgelegt. Dies kann durch einen entsprechenden Eintrag in einem Verzeichnis der Objektbeschreibungen (Object Dictionary) erfolgen. Die zyklische Abfrage des Prozesswertes wird anhand der Beschreibung des Produzenten entsprechend rekonfiguriert 25, der zugehörige Prozesswert wird als zu diesem Produzenten gehörig markiert 26 und von nun an von diesem Produzenten abgefragt. Diese Zuordnung kann anhand eines entsprechenden Eintrags in einem Produzentenbeschreibungsobjekt (Producer Description Object) erfolgen. In Schritt 25 von FIG. 2 wird diese Rekonfiguration und Zuordnung als "Rekonfiguriere PDO-Zuordnung" bezeichnet.

Gleichzeitig kann der konsumierende Teilnehmer 4 den produzierenden Teilnehmer 4 überwachen. Beispielsweise kann der konsumierende Teilnehmer 4 das Heartbeat-Signal bzw. die Heartbeat-Telegramme des Produzenten überwachen. Der konsumierende Teilnehmer 4 legt einen produzierenden Teilnehmern 4 als Produzenten für einen bestimmten Prozesswert fest. In dem Fall, dass der produzierende Teilnehmer 4 ausfällt, stellt der konsumierende Teilnehmer 4 erneut eine Anfrage um einen alternativen Produzenten zu finden.

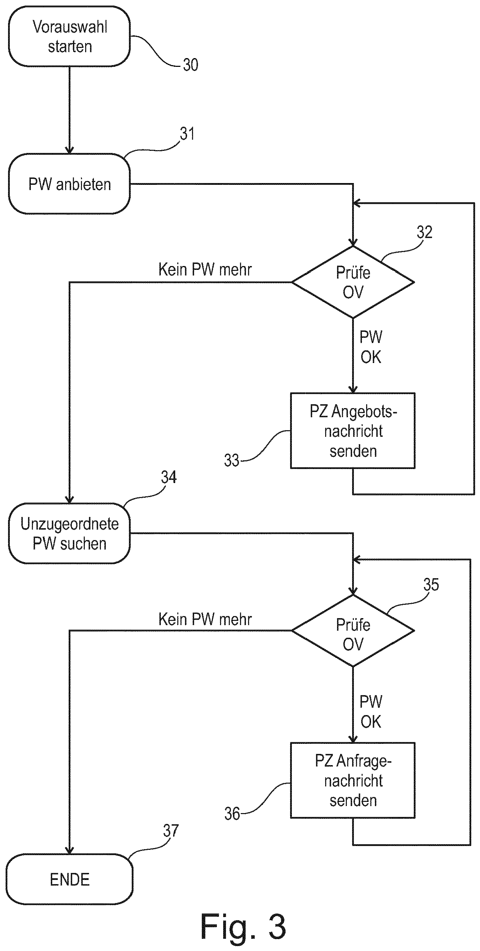

Tritt der Teilnehmer 4 in den Zustand der Vorauswahl 30 ein, so bietet dieser zunächst die von ihm selbst produzierten Prozesswerte an 31. Dieser Teil des Ablaufdiagramms ist in FIG. 3 gezeigt. Der Teilnehmer 4 überprüft 32 zunächst sein Verzeichnis der Objektbeschreibungen (ein Verzeichnis der Objektbeschreibungen oder Objektverzeichnis soll in den Figuren auch mit OV abgekürzt werden). In diesem Verzeichnis kann zu jedem Prozesswert ein entsprechendes Objekt vorliegen. Wird bei der Überprüfung 32 dieses Verzeichnisses ein Prozesswert gefunden, den der Teilnehmer 4 produziert, so versendet 33 der Teilnehmer 4 ein Angebots-Telegramm an die übrigen Teilnehmer 4 des BUS-Systems 2. In diesem Angebots-Telegramm können neben Informationen über den Prozesswert selbst, Informationen über eine Klassifikation dieses Prozesswertes vorhanden sein. Die Klassifikation des Prozesswertes anhand einer Art oder eines Typs des Teilnehmers 4 kann anhand seiner Position und / oder seiner Anordnung innerhalb der Vorrichtung 1 bzw. Installation und / oder innerhalb des BUS-Systems 2 und / oder anhand seiner Funktionalität vorgenommen werden. Ein Beispiel für eine solche Klassifikation wäre: Typ des Teilnehmers: Druckmessgerät; Position innerhalb der Vorrichtung: Prozesszweig Nr. 7; Funktionalität: Messgerät.

Der Teilnehmer 4 kann für alle Prozesswerte, die er produziert, entsprechende Angebots-Telegramme versenden. Mit anderen Worten werden die Schritte 32 und 33 so lange wiederholt, bis in dem Verzeichnis der Objektbeschreibungen keine weiteren Prozesswerte mehr vorhanden sind, für die noch kein Angebots-Telegramm versendet wurden.

Als nächstes sucht 34 der Teilnehmer 4 nach Prozesswerten, denen noch kein anderer Teilnehmer 4 als Produzent fest zugeordnet ist. Zu diesem Zweck wird eine erneute Überprüfung 35 des Verzeichnisses der Objektbeschreibungen vorgenommen. Ist der Teilnehmer 4 ausschließlich Produzent von Prozesswerten und konsumiert selbst keine Prozesswerte, so verfügt das Verzeichnis über keine weiteren Objekte, welche konsumierten Prozesswerten zugeordnet sind. Der Teilnehmer 4 beendet 37 die Vorauswahl. Ist der Teilnehmer 4 hingegen Konsument zumindest eines Prozesswertes, so wird dieser im Verzeichnis der Objektbeschreibungen aufgefunden, und der Teilnehmer 4 versendet 36 ein Anfrage-Telegramm an die übrigen Teilnehmer 4 des BUS-Systems 2. Wie bereits im Hinblick auf das Angebots-Telegramm erwähnt, kann auch das Anfrage-Telegramm Informationen hinsichtlich einer Klassifikation des von dem Teilnehmer 4 konsumierten Prozesswertes umfassen. Diese Klassifikation kann analog zu der im Hinblick auf das Angebots-Telegramm erwähnten Klassifikation eingerichtet sein.

Die Allokation zwischen einem Produzenten und einem Konsumenten eines Prozesswertes wird nun beispielhaft anhand eines ersten und eines zweiten Teilnehmers 4 beschrieben. Bei diesen Teilnehmern 4 kann es sich grundsätzlich um beliebige Teilnehmer 4 der Vorrichtung 1 handeln, welche eine entsprechende Funktionalität aufweisen.

Die von einem ersten Teilnehmer 4 versendeten Angebots- und Anfrage-Telegramme werden zumindest von dem zweiten Teilnehmer 4 des BUS-Systems 2 empfangen. Dieser zweite Teilnehmer 4 kann eine Vielzahl von Angebots- und Anfrage-Telegrammen erhalten.

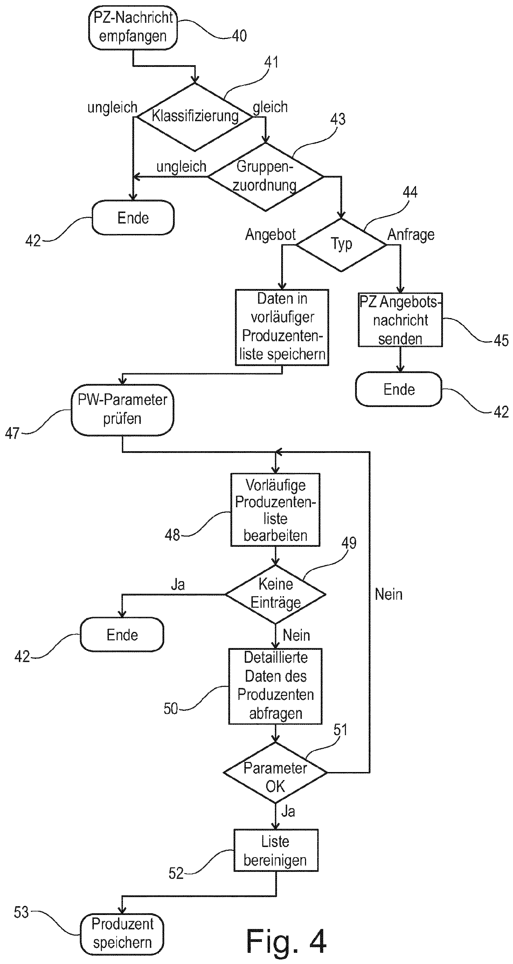

FIG. 4 zeigt einen weiteren Teil eines Ablaufdiagramms, wobei der zweite Teilnehmer 4 innerhalb des BUS-Systems 2 in Schritt 40 zunächst ein Angebots- oder Anfrage-Telegramm empfängt. Anfrage- oder Angebots-Telegramme sollen insbesondere in den Figuren auch als Partnerzuordnungsnachrichten, abgekürzt als PZ-Nachricht, bezeichnet werden. Das empfangene Angebots- oder Anfrage-Telegramm wird hinsichtlich seiner Klassifikation überprüft 41. Sollte dieser Vergleich 41 negativ ausfallen, d. h. die Klassifikation des empfangenen Angebots- oder Anfrage-Telegramms entspricht nicht dem Anforderungsprofil des empfangenen Teilnehmers 4, so endet 42 die Partnerallokation für diesen Teilnehmer 4. Im Fall eines erfolgreichen Vergleichs wird das Angebots- bzw. Anfrage-Telegramm hinsichtlich einer Gruppenzugehörigkeit des Absenders überprüft 43. Die Gruppenzugehörigkeit kann z. B. durch die Anordnung des absendenden Teilnehmers 4 innerhalb eines bestimmten Strangs oder innerhalb eines bestimmten Teils einer Installation, insbesondere eines fluidischen Systems, bestimmt sein. Die Gruppenzugehörigkeit kann als Bestandteil einer Klassifikation des betreffenden Prozesswertes verstanden werden. Ist dieser Vergleich nicht erfolgreich, so endet 42 wiederum die Partnerallokation. Im Fall eines erfolgreichen Vergleichs überprüft 44 der zweiten Teilnehmer 4, ob es sich bei dem empfangenen Telegramm um ein Angebots-Telegramm oder um ein Anfrage-Telegramm handelt. Auf ein Anfrage-Telegramm reagiert der zweite Teilnehmer 4, indem er ein Angebots-Telegramm zumindest an den Absender des Anfrage-Telegramms sendet 45. Nachdem dieses Angebots-Telegramm versendet 45 wurde, endet 42 für den zweiten Teilnehmer das Verfahren zur Partnerallokation. Handelt es sich bei dem empfangenen Telegramm hingegen um ein Angebots-Telegramm, so wird die Adresse bzw. Netzwerkadresse des sendenden Teilnehmers und eine Beschreibung, wie beispielsweise ein Typ des in dem Angebots-Telegramm enthaltene Prozesswert, in einer Vorauswahlliste gespeichert 46.

Anschließend kann eine Verifizierung 47 der Produzenten der Prozesswerte erfolgen. Zu diesem Zweck können die Parameter des Prozesswertes, welche diesen beschreiben können, überprüft werden. Im Rahmen der Verifizierung kann eine Vorauswahlliste abgearbeitet 48 werden. Während der Abarbeitung 48 dieser Vorauswahlliste kann der Teilnehmer 4 überprüfen, ob in dieser Liste Prozesswerte vorhanden sind 49, welche noch nicht verifiziert wurden. Enthält die Vorauswahlliste keine Einträge, so endet 42 das Verfahren. Sofern die Vorauswahlliste nicht leer ist, fordert der zweite Teilnehmer 4 in Schritt 50 weitere, detaillierte Informationen bezüglich des Prozesswertes in einem spezifischen Anfrage-Telegramm von dem Produzenten des Prozesswertes an. Zu diesem Zweck sendet der Teilnehmer 4 an die in der Vorauswahlliste gespeicherten Teilnehmer 4 spezifische Anfrage-Telegramme. In diesen kann eine Abfrage hinsichtlich des Typs der angebotenen Prozesswerte enthalten sein. Die Kommunikation der spezifischen Angebots- und Anfrage-Telegramme kann auf CANopen-Telegrammen basieren. Mit anderen Worten kann es sich also bei den spezifischen Angebots- oder Anfrage-Telegrammen um Telegramme entsprechend dem CANopen-Standard handeln, welche zu diesem Zweck verwendet werden. Der Typ eines Prozesswertes kann dessen Einheit, dessen Datentyp und / oder dessen Genauigkeit sein. Die angefragten Teilnehmer 4 können mit spezifischen Angebots-Telegrammen antworten, in denen die entsprechenden Informationen vorhanden sind. Diese Parameter werden seitens des zweiten Teilnehmers überprüft 51. Sofern die Parameter nicht dem internen Anforderungsprofil des zweiten Teilnehmers entsprechen, wird die Abarbeitung 48 der Vorauswahlliste mit dem nächsten Prozesswert fortgesetzt. Stimmen die Parameter des Prozesswertes hingegen mit dem internen Anforderungsprofil des zweiten Teilnehmers 4 überein, so werden, sofern die Liste vollständig abgearbeitet ist, diese entsprechend gekennzeichnet 52. Die im Rahmen der Vorauswahl zunächst angelegte Liste der Produzenten des entsprechenden Prozesswertes wird also um diejenigen Einträge bzw. Teilnehmer 4 bereinigt, für die die Parameter des angebotenen Prozesswertes nicht mit dem Anforderungsprofil des konsumierenden Teilnehmers 4 übereinstimmen.

Ist beispielsweise der erste Teilnehmer 4 derjenige Produzent, welcher den Prozesswert entsprechend dem Anforderungsprofil des zweiten Teilnehmers 4 liefert, wird eine persistente Verknüpfung zwischen dem ersten Teilnehmer 4 als Produzent des Prozesswertes und dem zweiten Teilnehmer 4 als Konsument des Prozesswertes festgelegt. Diese Zuordnung kann insbesondere der zweite Teilnehmer 4 als Konsument des Prozesswertes treffen und intern hinterlegen.

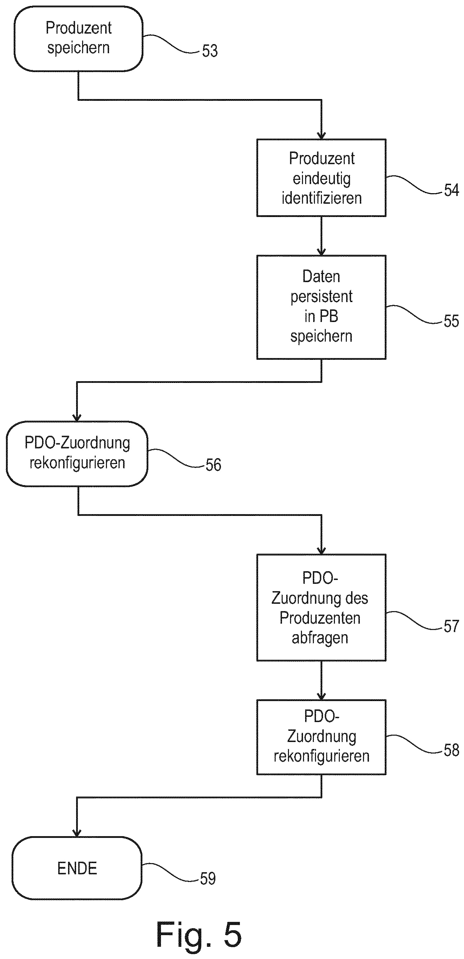

Nach erfolgter Zuordnung 53 des Produzenten eines Prozesswertes durch den Konsumenten des entsprechenden Prozesswertes, verfährt der Teilnehmer 4 entsprechend dem in FIG. 5 gezeigten Teils des Ablaufdiagramms. Der zweite Teilnehmer 4 fragt eine eindeutige Identifikation des ersten Teilnehmers 4, d.h. des Produzenten, ab 54. Beispielsweise kann dessen Hardwareadresse oder Seriennummer abgefragt werden. Diese Parameter werden als zu dem entsprechenden Prozesswert gehörig persistent gespeichert 55, und dienen der Wiederverbindung zwischen Konsument und Produzent des Prozesswertes, beispielsweise bei der Initialisierung der Vorrichtung 1. Anschließend wird die zyklische Abfrage 56 des Prozesswertes rekonfiguriert. Diese Rekonfiguration erfolgt durch eine entsprechende Einrichtung der Prozessdatenobjekte (PDO). Zu diesem Zweck werden Mapping-Informationen von dem Produzenten 4 des Prozesswertes abgefragt 57 und in dem entsprechenden Prozessdatenobjekt des Konsumenten abgelegt 58. Am Schluss des Verfahrens hat der Konsument für seine benötigten Prozesswerte jeweils einen Produzenten fest zugeordnet. Er kann seine Produzenten überwachen, beispielsweise indem er deren Heartbeat-Telegramme überwacht. Das Verfahren zur Partnerallokation kann in Schritt 59 beendet werden.

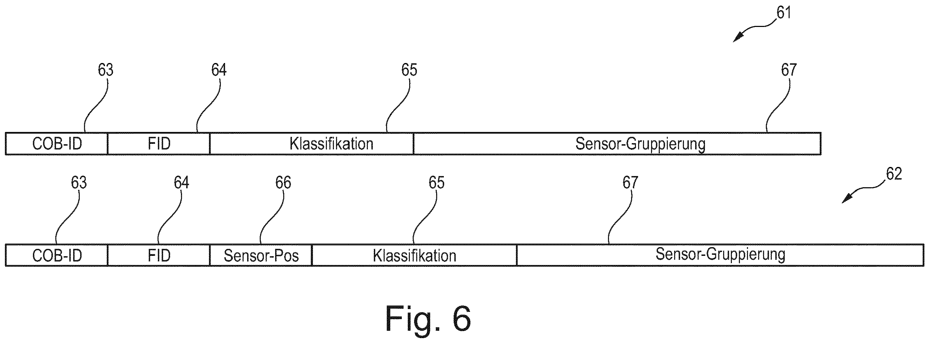

FIG. 6 zeigt ein Ausführungsbeispiel für ein Anfrage-Telegramm 61 und ein Ausführungsbeispiel für ein Angebots-Telegramm 62. Die gezeigten Ausführungsbeispiele betreffen den Fall, dass das BUS-System 2 ein CAN-BUS-System ist, und außerdem ein zu CANopen kompatibles Kommunikationsprotokoll verwendet. Das Anfrage-Telegramm 61 und das Angebots-Telegramm 62 umfassen jeweils ein beispielsweise 11-Bit langes Objekt-Identifizierungsfeld 63. Dieses Feld 63 (COB-ID) ist nicht durch den CANopen-Standard festgelegt, und kann das Datenobjekt beschreibende Informationen umfassen. Das Feld 64 kann die Art der versendeten Nachricht kennzeichnen. Beispielsweise kann in diesem Feld 64 (FID) angegeben sein, dass es sich um ein Telegramm handelt, welches im Rahmen der oben beschriebenen Partnerallokation versandt wurde.

Das Anfrage-Telegramm 61 kann außerdem ein Feld 65 umfassen, welches Informationen hinsichtlich einer Klassifikation des angefragten Prozesswertes umfasst. Ähnlich kann das Angebots-Telegramm 62 ein solches Klassifikationsfeld 65 umfassen, welches Informationen hinsichtlich einer Klassifikation eines angebotenen Prozesswertes umfasst. Das Angebots-Telegramm 62 kann außerdem ein Feld 66 (Sensor-Pos) umfassen, welches Informationen hinsichtlich einer Position im Objektverzeichnis eines angebotenen Prozesswertes umfasst.

Sowohl das Anfrage-Telegramm 61 als auch das Angebots-Telegramm 62 kann ein Feld 67 (Sensor-Gruppierung) umfassen, welches Informationen hinsichtlich einer Gruppenzugehörigkeit eines Produzenten eines Prozesswertes (im Fall eines Angebots-Telegramms 62) oder Informationen hinsichtlich einer Gruppenzugehörigkeit eines Konsumenten eines Prozesswertes (im Fall eines Anfrage-Telegramms 61) umfasst.

## Patentansprüche

1. Vorrichtung umfassend ein BUS-System (2) mit einer Vielzahl von Teilnehmern (4), welche Produzent und / oder Konsument zumindest eines Prozesswertes (PW) sind, wobei den Teilnehmern (4) des BUS-Systems Informationen bezüglich zumindest einer Zuordnungseigenschaft von den Teilnehmern (4) einer Gruppe von Teilnehmern des BUS-Systems übermittelt werden, wobei die Zuordnungseigenschaft durch den von den entsprechenden Teilnehmern (4) produzierten und / oder konsumierten zumindest einen Prozesswert (PW) bestimmt ist, **dadurch gekennzeichnet, dass** ein erster Teilnehmer (4) der Gruppe dazu ausgelegt ist ein Angebots- und / oder ein Anfrage-Telegramm an die anderen Teilnehmer des BUS-Systems zu senden, und ein zweiter Teilnehmer (4) der BUS-Systems dazu ausgelegt ist, in Reaktion auf ein Anfrage-Telegramm des ersten Teilnehmers ein Angebots-Telegramm zumindest an den ersten Teilnehmer (4) zu senden, wobei das Angebots- und Anfrage-Telegramm jeweils eine innerhalb des BUS-Systems (2) kommunizierte Nachricht ist und Informationen bezüglich des Prozesswertes (PW) umfasst.

2. Vorrichtung nach Anspruch 1, wobei die Zuordnungseigenschaft außerdem durch eine Klassifikation und / oder durch einen Typ des zumindest einen Prozesswertes (PW) bestimmt ist.

3. Vorrichtung nach Anspruch 2, wobei die Klassifizierung der Prozesswerte (PW) anhand eines Typs und / oder einer Art des den Prozesswert produzierenden und / oder konsumierenden Teilnehmers (4), anhand einer Position und / oder einer Anordnung des Teilnehmers (4) innerhalb einer Installation und / oder innerhalb des BUS-Systems (2) und / oder anhand einer Funktionalität des Teilnehmers (4) bestimmt ist.

4. Vorrichtung nach einem der vorhergehenden Ansprüche, wobei die Teilnehmer (4) des BUS-Systems hinsichtlich ihrer Netzwerkfunktionalität gleichwertig sind und das BUS-System insbesondere keinen Teilnehmer (4) mit einer Master-Funktionalität umfasst.

5. Vorrichtung nach einem der vorhergehenden Ansprüche, wobei die Teilnehmer (4) der Gruppe jeweils zumindest Produzent zumindest eines Prozesswertes (PW) sind, und außerdem dazu ausgelegt sind, jeweils ein Angebots-Telegramm an die übrigen Teilnehmer (4) des BUS-Systems zu senden, welches Informationen bezüglich des zumindest einen von dem jeweiligen Teilnehmer (4) produzierten Prozesswertes und einer Klassifikation dieses Prozesswertes (PW) umfasst.

6. Vorrichtung nach Anspruch 5, wobei zumindest ein weiterer Teilnehmer (4) des BUS-Systems, der zumindest Konsument des zumindest einen Prozesswertes (PW) ist, dazu ausgelegt ist, die Angebots-Telegramme der Teilnehmer (4) der Gruppe zu empfangen und jeweils hinsichtlich der Klassifikation der angebotenen Prozesswerte (PW) auszuwerten, indem der weitere Teilnehmer (4) die Klassifikation der angebotenen Prozesswerte (PW) mit seinem Anforderungsprofil hinsichtlich der Klassifikation der von ihm konsumierten Prozesswerte (PW) vergleicht.

7. Vorrichtung nach Anspruch 6, wobei der weitere Teilnehmer (4) außerdem dazu ausgelegt ist, an eine Untergruppe von Teilnehmern (4) der Gruppe, für die der Vergleich der Klassifikation der angebotenen Prozesswerte mit seinem Anforderungsprofil erfolgreich ist, jeweils ein spezifisches Anfrage-Telegramm zu senden, wobei in diesem spezifischen Anfrage-Telegramm eine Abfrage hinsichtlich des Typs der angebotenen Prozesswerte (PW) enthalten ist.

8. Vorrichtung nach Anspruch 7, wobei der Typ eines Prozesswertes (PW) dessen Einheit, Datentyp und / oder Genauigkeit ist.

9. Vorrichtung nach Anspruch 7 oder 8, wobei die Teilnehmer (4) der Untergruppe dazu ausgelegt sind auf das spezifische Anfrage-Telegramm ein spezifisches Angebots-Telegramm an den weiteren Teilnehmer (4) zu senden, welches Informationen bezüglich des Typs der von den jeweiligen Teilnehmern (4) der Untergruppe produzierten Prozesswerte (PW) umfasst.

10. Vorrichtung nach Anspruch 9, wobei der weitere Teilnehmer (4) dazu ausgelegt ist, anhand der in den spezifischen Angebots-Telegrammen vorhandenen Informationen bezüglich des Typs der von einem Teilnehmer (4) der Untergruppe produzierten Prozesswerte (PW) diesen Teilnehmer (4) der Untergruppe auszuwählen und dem betreffenden Prozesswert (PW) als Produzent fest zuzuordnen.

11. Vorrichtung nach Anspruch 10, wobei der weitere Teilnehmer (4) außerdem dazu ausgelegt ist, den Produzenten des Prozesswertes (PW) zu überwachen.

12. Vorrichtung nach einem der vorhergehenden Ansprüche, wobei das BUS-System (2) ein Feldbus-System, insbesondere ein CAN-BUS-System ist, und wobei insbesondere ein Kommunikationsprotokoll des BUS-Systems CANopen oder ein zu CANopen kompatibles Kommunikationsprotokoll ist.

13. Fluidisches System, umfassend eine Vorrichtung nach einem der vorhergehenden Ansprüche, wobei zumindest ein Teilnehmer des BUS-Systems (2) fluidische Komponenten sind.

14. Verfahren zum Betrieb eines BUS-Systems (2) mit einer Vielzahl von Teilnehmern (4), welche Produzent und / oder Konsument zumindest eines Prozesswertes (PW) sind, umfassend Übermitteln von Informationen bezüglich zumindest einer Zuordnungseigenschaft des entsprechenden Teilnehmers (4) der Gruppe durch die Teilnehmer (4) einer Gruppe von Teilnehmern des BUS-Systems an die Teilnehmern (4) des BUS-Systems (2), wobei die Zuordnungseigenschaft durch den von den entsprechenden Teilnehmern (4) produzierten und / oder konsumierten zumindest einen Prozesswert (PW) bestimmt ist, **gekennzeichnet durch:** Senden eines Angebots- und / oder ein Anfrage-Telegramms an die anderen Teilnehmer (4) des BUS-Systems (2) durch einen ersten Teilnehmer (4) der Gruppe, und Senden eines Angebots-Telegramms durch einen zweiten Teilnehmer (4) des BUS-Systems (2) zumindest an den ersten Teilnehmer (4) in Reaktion auf ein Anfrage-Telegramm des ersten Teilnehmers (4), wobei das Angebots- und Anfrage-Telegramm jeweils eine innerhalb des BUS-Systems (2) kommunizierte Nachricht ist und Informationen bezüglich des Prozesswertes (PW) umfasst.

## Claims

1. A device comprising a BUS system (2) with a multitude of users (4) which are producers and/or consumers of at least one process value (PV), wherein information regarding at least one allocation feature is transmitted to the users (4) of the BUS system by the users (4) of a group of users of the BUS system, the allocation feature being determined by the at least one process value (PV) produced and/or consumed by the respective users (4), **characterized in that** a first user (4) of the group is designed to send an offer telegram and/or a request telegram to the other users of the BUS system, and a second user (4) of the BUS system is designed to send an offer telegram at least to the first user (4) in response to a request telegram of the first user, the offer and request telegrams each being a message communicated within the BUS system (2) and comprising information regarding the process value (PV).

2. The device according to claim 1, wherein the allocation feature is further determined by a classification and/or by a type of the at least one process value (PV).

3. The device according to claim 2, wherein the classification of the process values (PV) is determined based on a type and/or a kind of the user (4) producing and/or consuming the process value, based on a position and/or an arrangement of the user (4) within an installation and/or within the BUS system (2) and/or based on a functionality of the user (4).

4. The device according to any of the preceding claims, wherein the users (4) of the BUS system are equivalent with regard to their network functionality, and the BUS system in particular comprises no user (4) having a master functionality.

5. The device according to any of the preceding claims, wherein the users (4) of the group are each at least a producer of at least one process value (PV) and are furthermore designed to send an offer telegram each to the other users (4) of the BUS system, the offer telegram comprising information regarding the at least one process value produced by the respective user (4) and regarding a classification of this process value (PV).

6. The device according to claim 5, wherein at least one further user (4) of the BUS system, which is at least a consumer of the at least one process value (PV), is designed to receive the offer telegrams of the users (4) of the group and to evaluate each with regard to the classification of the process values (PV) offered, by the further user (4) comparing the classification of the process values (PV) offered with its requirements specification with regard to the classification of the process values (PV) consumed by it.

7. The device according to claim 6, wherein the further user (4) is additionally designed to send a respective specific request telegram each to a subgroup of users (4) of the group for which the comparison of the classification of the process values offered with its requirements specification is successful, this specific request telegram containing a query with regard to the type of process values (PV) offered.

8. The device according to claim 7, wherein the type of a process value (PV) is the unit, data type and/or accuracy thereof.

9. The device according to claim 7 or 8, wherein the users (4) of the subgroup are designed to send a specific offer telegram to the further user (4) in reply to the specific request telegram, the specific offer telegram comprising information regarding the type of the process values (PV) produced by the respective users (4) of the subgroup.

10. The device according to claim 9, wherein the further user (4) is designed to make use of the information existing in the specific offer telegrams and regarding the type of the process values (PV) produced by a user (4) of the subgroup for selecting this user (4) of the subgroup and firmly allocating it to the process value (PV) concerned as a producer.

11. The device according to claim 10, wherein the further user (4) is furthermore designed to monitor the producer of the process value (PV).

12. The device according to any of the preceding claims, wherein the BUS system (2) is a field bus system, in particular a CAN-BUS system, and wherein in particular a communication protocol of the BUS system is CANopen or a communication protocol that is compatible with CANopen.

13. A fluidic system comprising a device according to any of the preceding claims, wherein at least one user of the BUS system (2) is fluidic components.

14. A method of operating a BUS system (2) including a multitude of users (4) which are producers and/or consumers of at least one process value (PV), comprising transmitting, by the users (4) of a group of users of the BUS system, information regarding at least one allocation feature of the respective user (4) of the group to the users (4) of the BUS system (2), the allocation feature being determined by the at least one process value (PV) produced and/or consumed by the respective users (4), **characterized by:** sending, by a first user (4) of the group, an offer telegram and/or a request telegram to the other users (4) of the BUS system (2), and sending, by a second user (4) of the BUS system (2), an offer telegram at least to the first user (4) in response to a request telegram of the first user (4), the offer and request telegrams each being a message communicated within the BUS system (2) and comprising information regarding the process value (PV).

## Revendications

1. Dispositif comprenant un système de BUS (2) qui présente une pluralité de participants (4) qui sont producteurs et/ou consommateurs d'au moins une valeur de processus (PW), des informations concernant au moins une propriété d'affectation étant transmises aux participants (4) du système de BUS par les participants (4) d'un groupe de participants du système de BUS, la propriété d'affectation étant déterminée par ladite au moins une valeur de processus (PW) produite et/ou consommée par les participants (4) correspondants, **caractérisé en ce qu'**un premier participant (4) du groupe est conçu de manière à envoyer un télégramme d'offre et/ou de demande aux autres participants du système de BUS, et **en ce qu'**un deuxième participant (4) du système de BUS est conçu de manière à envoyer un télégramme d'offre au moins au premier participant (4) en réponse à un télégramme de demande du premier participant, le télégramme d'offre et de demande étant respectivement un message communiqué au sein du système de BUS (2) et comprenant des informations concernant la valeur de processus (PW).

2. Dispositif selon la revendication 1, la propriété d'affectation étant en outre déterminée par une classification et/ou par un type de ladite au moins une valeur de processus (PW).

3. Dispositif selon la revendication 2, la classification des valeurs de processus (PW) étant déterminée sur la base d'un type et/ou d'un genre du participant (4) produisant et/ou consommant la valeur de processus, d'une position et/ou d'un agencement du participant (4) au sein d'une installation et/ou au sein du système de BUS (2), et/ou d'une fonctionnalité du participant (4).

4. Dispositif selon l'une des revendications précédentes, les participants (4) du système de BUS étant équivalents quant à leur fonctionnalité de réseau, et le système de BUS ne comprenant en particulier pas de participant (4) à fonctionnalité maître.

5. Dispositif selon l'une des revendications précédentes, les participants (4) du groupe étant chacun au moins un producteur d'au moins une valeur de processus (PW) et étant en outre conçus de manière à respectivement envoyer aux autres participants (4) du système de BUS un télégramme d'offre qui comprend des informations concernant ladite au moins une valeur de processus produite par le participant (4) respectif et une classification de cette valeur de processus (PW).

6. Dispositif selon la revendication 5, au moins un participant (4) supplémentaire du système de BUS qui est au moins un consommateur de ladite au moins une valeur de processus (PW) étant conçu de manière à recevoir les télégrammes d'offre des participants (4) du groupe et à les évaluer chacun quant à la classification des valeurs de processus (PW) offertes par une comparaison, réalisée par le participant (4) supplémentaire, de la classification des valeurs de processus (PW) offertes avec son profil requis quant à la classification des valeurs de processus (PW) consommées par celui-ci.

7. Dispositif selon la revendication 6, le participant (4) supplémentaire étant en outre conçu de manière à envoyer un télégramme de demande spécifique respectif à un sous-groupe de participants (4) du groupe pour lesquels la comparaison de la classification des valeurs de processus offertes avec son profil requis réussit, une interrogation concernant le type des valeurs de processus (PW) offertes étant contenue dans ce télégramme de demande spécifique.

8. Dispositif selon la revendication 7, le type d'une valeur de processus (PW) étant l'unité, le type de donnée et/ou la précision de celle-ci.

9. Dispositif selon la revendication 7 ou 8, les participants (4) du sous-groupe étant conçus de manière à envoyer un télégramme d'offre spécifique au participant (4) supplémentaire en réponse au télégramme de demande spécifique, lequel comprend des informations concernant le type des valeurs de processus (PW) produites par les participants (4) respectifs du sous-groupe.

10. Dispositif selon la revendication 9, le participant (4) supplémentaire étant conçu de manière à utiliser les informations contenues dans les télégrammes d'offre spécifiques et concernant le type des valeurs de processus (PW) produites par un participant (4) du sous-groupe pour choisir ce participant (4) du sous-groupe et l'affecter définitivement en tant que producteur à la valeur de processus (PW) concernée.

11. Dispositif selon la revendication 10, le participant (4) supplémentaire étant en outre conçu de manière à surveiller le producteur de la valeur de processus (PW).

12. Dispositif selon l'une des revendications précédentes, le système de BUS (2) étant un système de bus de terrain, en particulier un système de BUS CAN, et un protocole de communication du système de BUS étant en particulier CANopen ou un protocole de communication compatible avec CANopen.

13. Système fluidique, comprenant un dispositif selon l'une des revendications précédentes, au moins un participant du système de BUS (2) étant des composants fluidiques.

14. Procédé de mise en oeuvre d'un système de BUS (2) qui présente une pluralité de participants (4) qui sont producteurs et/ou consommateurs d'au moins une valeur de processus (PW), comprenant la transmission, aux participants (4) du système de BUS (2), d'informations concernant au moins une propriété d'affectation du participant (4) correspondant du groupe, par les participants (4) d'un groupe de participants du système de BUS, la propriété d'affectation étant déterminée par ladite au moins une valeur de processus (PW) produite et/ou consommée par les participants (4) correspondants, **caractérisé par** : l'envoi d'un télégramme d'offre et/ou de demande aux autres participants (4) du système de BUS (2) par un premier participant (4) du groupe, et l'envoi d'un télégramme d'offre par un deuxième participant (4) du système de BUS (2) au moins au premier participant (4) en réponse à un télégramme de demande du premier participant (4), le télégramme d'offre et de demande étant respectivement un message communiqué au sein du système de BUS (2) et comprenant des informations concernant la valeur de processus (PW).
